**Europäisches Patentamt**

**European Patent Office**

**Office européen des brevets**

(19)

(11) **EP 1 130 508 A2**

(12) **EUROPÄISCHE PATENTANMELDUNG**

(43) Veröffentlichungstag:
**05.09.2001 Patentblatt 2001/36**

(51) Int Cl.[7]: **G06F 7/58**

(21) Anmeldenummer: **00125065.3**

(22) Anmeldetag: **17.11.2000**

| | |
|---|---|
| (84) Benannte Vertragsstaaten:<br>**AT BE CH CY DE DK ES FI FR GB GR IE IT LI LU MC NL PT SE TR**<br>Benannte Erstreckungsstaaten:<br>**AL LT LV MK RO SI**<br><br>(30) Priorität: **31.12.1999 DE 19963962** | (71) Anmelder: **ROBERT BOSCH GMBH**<br>**70442 Stuttgart (DE)**<br><br>(72) Erfinder:<br>• **Bertram, Gerold**<br>  **30459 Hannover (DE)**<br>• **Lehning, Michael**<br>  **31137 Hildesheim (DE)** |

(54) **Pseudozufallsgenerator und Rundfunksender und Rundfunkempfänger**

(57) Es wird ein Pseudozufallsgenerator zum Erzeugen von Pseudozufallsworten bzw. ein Rundfunksender bzw. ein Rundfunkempfänger vorgeschlagen, der dazu dient, gleichzeitig mehrere Pseudozufallsworte zu erzeugen bzw. verschlüsselte Daten zu versenden bzw. verschlüsselte Daten zu empfangen. Der Pseudozufallsgenerator umfaßt mehrere Register, wobei mindestens ein Register zurückgekoppelt ist. Weiterhin umfaßt weist der Pseudozufallsgenerator arithmetisch-lo-gische Einheiten auf, mit denen die Pseudozufallsworte berechnet werden. Durch die gleichzeitige Berechnung von Pseudozufallsworten können gleichzeitig mehrere Daten verschlüsselt werden. Die arithmetisch-logische Einheit weist zwei Volladdiererketten auf, deren Ausgänge an einen Multiplexer angeschlossen sind. Die rückgekoppelten Register sind mit gepufferten Eingängen verbunden, die rückgekoppelte Signale aufweisen, wobei die Signale nur in die Register weitergeschoben werden, wenn die Register leer sind.

**EP 1 130 508 A2**

**Beschreibung**

Stand der Technik

Die Erfindung geht aus von einem Pseudozufallsgenerator zum Erzeugen von Pseudozufallsworten bzw. von einem Rundfunksender zum Senden von Rundfunksignalen bzw. von einem Rundfunkempfänger zum Empfang von Rundfunksignalen nach der Gattung der unabhängigen Patentansprüche.

Es ist bereits aus der Norm ETS 300 174 bekannt, wie ein Pseudozufallsgenerator aufgebaut ist. Dieser Pseudozufallsgenerator wird eingesetzt, um Daten eines digitalen Datenstroms zu verwürfeln, wobei die einzelnen Bytes der Daten jeweils mit einem von dem Pseudozufallsgenerator erzeugten Byte mit einer Exclusiv-Oder-Verknüpfung verknüpft werden. Dieser bekannte Pseudozufallsgenerator weist vier Registerketten auf, die mit Q, R, S und T bezeichnet sind, wobei die Q-Registerkette 5 Register mit jeweils einer Breite von fünf Bits aufweist, wobei die R-Registerkete 7 Register mit einer Breite von 5 Bits aufweist, wobei die S-Registerkette 5 Register mit einer Breite von 7 Bits aufweist und wobei die T-Registerkette 7 Register mit einer Breite von 7 Bits aufweist.

Im folgenden soll nur kurz der Aufbau der Q-Registerkette erläutert werden. Die anderen Register sind im wesentlichen analog dazu aufgebaut.

Die Ein- und Ausgänge der einzelnen Register der Q-Registerkette sind im Kreis miteinander verknüpft, so daß mit jedem Takt des Pseudozufallsgenerators der Inhalt des Registers Q2 nach Q1, dann von Q1 nach Q0, dann von Q0 unter Ausführung einer arithmetisch-logischen Operation, die gleich noch erläutert wird, nach Q4 bzw. von Q4 nach Q3 übertragen wird.

Die Ausgänge des Registers Q3 sind mit den Eingängen des Registers Q2 über Exclusiv-Oder-Verknüpfungen verbunden, die bei der Übertragung des Inhalts von Q3 nach Q2 eine Exclusiv-Oder-Verknüpfung dieses Inhalts mit gleichzeitig auf einem Bus anliegenden Daten bilden. Der Bus dient zum Initialisieren der Registerkette. Indem bei Inbetriebnahme des Pseudozufallsgenerators oder nach einem Rücksetzen Datenbytes in einer der Zahl der Register der längsten Registerkette entsprechenden Zahl auf den Bus gegeben und in die Register eingetaktet werden, wird ein Anfangszustand des Generators eingestellt, durch den die später zu erzeugende Zahlenfolge vorherbestimmt ist.

Zwischen den Registern Q0 und Q4 ist eine arithmetisch-logische Schaltung vorgesehen, die eine modifizierte Modulo-Operation an der Summe aus den bitweise negierten Inhalten der Register Q0 und Q2 ausführt. Diese modifizierte Modulo-Operation genügt der Formel

$$(a+b) \bmod K = \begin{cases} a+b, falls\,(a+b) \leq K \\ a+b-K, falls\,(a+b) > K \end{cases},$$

wobei a und b jeweils die negierten Registerinhalte sind und $k = 2^i - 1$ ist. Für die hier beispielhaft betrachteten Q-Register mit i=5 gilt also k=31. In den 7 Bit breiten Registern S und T ist jeweils eine entsprechende Schaltung vorgesehen, die eine Operation Modulo $2^7 - 1 = 121$ ausführt. Die Ausgänge von jeweils 4 Bits der einzelnen Register, nämlich der Register Q1, Q2 und Q3 sind an eine Logikschaltung angeschlossen, die zunächst die Ausgabewerte von je zwei Registern Und-verknüpft und die zwei der so erhaltenen Ergebnisse dann Oder-verknüpft. So gewinnt die Logikschaltung vier Datenwörtern von je 4 Bit Breite. Jeweils zwei von diesen Datenwörtern werden exklusiv-oder-verknüpft und ergeben jeweils vier Bits einer acht Bit breiten Pseudozufallszahl, die ausgegeben wird.

Vorteile der Erfindung

Der erfindungsgemäße Pseudozufallsgenerator bzw. Rundfunksender bzw. Rundfunkempfänger mit den Merkmalen der unabhängigen Patentansprüche hat demgegenüber den Vorteil, daß pro Takt mehrere Pseudozufallsworte gleichzeitig berechnet werden. Durch diese Maßnahme wird entweder der Takt reduziert, oder die Rechengeschwindigkeit des Pseudozufallsgenerators wird erhöht. Es ergeben sich damit also erhebliche Rechengeschwindigkeitsvorteile.

Weiterhin ist von Vorteil, daß durch die Einführung von gepufferten Eingängen bei rückgekoppelten Registern in einem Takt zunächst bei der aufsteigenden Flanke des Taktsignals die Registerinhalte weiter verschoben werden, und mit der abfallenden Flanke des Taktsignals wird das rückgekoppelte Signal aus dem Puffer des Eingangs des Registers in das Register verschoben, falls alle rückgekoppelten Register leer sind. Dadurch wird die gleichzeitige Berechnung von Pseudozufallsworten in einem Operationsschritt ermöglicht.

Darüber hinaus ist es von Vorteil, mehrere Datenworte gleichzeitig zu verschlüsseln und in dieser Weise die Verarbeitungsgeschwindigkeit des Rundfunkempfängers bzw. des Rundfunksenders zu erhöhen.

Durch die in den abhängigen Ansprüchen aufgeführten Maßnahmen sind vorteilhafte Weiterbildungen und Verbesserungen des in den unabhängigen Ansprüchen angegebenen Pseudozufallsgenerators bzw. Rundfunksenders bzw. Rundfunkempfängers möglich.

Besonders vorteilhaft ist, daß durch ein Rotationsregister, das seine Bits zyklisch verschiebt, eine Vorschrift für die Berechnung der Pseudozufallszahlen in einfacher Weise erfüllt wird.

Darüber hinaus ist von Vorteil, daß durch zwei Volladdiereraketten die arithmetisch-logische Einheit realisiert wird. Durch die Verwendung von zwei Volladdiereraketten ist es möglich, zwei Berechnungsfälle abzudecken, zum einen, daß die Addition zweier Worte, die sich in zwei Registern befinden zu einem Übertrag führt und zum anderen, daß die Addition dieser beiden Worte nicht zu einem Übertrag führt. Mittels eines Multiplexers, bei dem entscheidend ist, ob ein Übertrag entstanden ist oder nicht, wird das entsprechende Ergebnis ausgewählt.

Weiterhin ist es von Vorteil, daß die Ausgänge der Register vier Bitleitungen als Abgriffe aufweisen, womit eine Vorschrift des Standards ETS 300 174 in einfacher Weise realisiert wird.

Zeichnung

Ausführungsbeispiele der Erfindung sind in der Zeichnung dargestellt und in der nachfolgenden Beschreibung näher erläutert. Es zeigen Figur 1 eine Parallelverarbeitung mit Q-Registern, Figur 2 ein Rotationsregister, Figur 3 eine arithmetisch-logische Einheit, Figur 4 eine Parallelverarbeitung mit R-Registern, Figur 5 eine Parallelverarbeitung mit S-Registern, Figur 6 eine Parallelverarbeitung mit T-Registern, Figur 7 Logikschaltungen, die die Ausgänge der Register verarbeiten, Figur 8 einen Rundfunksender und Figur 9 einen Rundfunkempfänger.

Beschreibung der Ausführungsbeispiele

Für Informationsdienste mit beschränktem Nutzerkreis ist eine Verschlüsselung erforderlich, so daß allein berechtigte Nutzer diese Informationsdienste empfangen und entschlüsseln können. Solche Informationsdienste sind z.B. Fernsehprogramme, Radioprogramme oder Datendienste. Bei Fernsehen und Radio ist im allgemeinen kein Rückkanal vom Empfänger zum Sender vorgesehen. Daher ist z.B. eine Paßwortabfrage, wie sie bei Internetanwendungen üblich ist, ausgeschlossen.

Damit der Nutzer Daten und/oder Programme bei Fernsehen und Radio also entschlüsseln kann, verfügt der Nutzer bereits über den Schlüssel, wobei entweder der Schlüssel mitübertragen wird, und der Nutzer dann mittels einer Entschlüsselung diesen Schlüssel zunächst entschlüsselt, um dann die Daten zu entschlüsseln. Der Nutzer hat dafür, also zum Entschlüsseln des Schlüssels, zum Beispiel eine Chipkarte. Das ist eine Karte, auf der Daten gespeichert sind, die der Nutzer in ein Lesegerät steckt, um die Daten zu lesen. Auf der Chipkarte ist dann der Code enthalten, um den Schlüssel zu entschlüsseln.

Pseudozufallsworte sind, wenn die Anfangskonstellation für die Berechnung der Pseudozufallsworte bekannt ist, berechenbar. Sie sind daher also nicht zufällig. Einem Nutzer muß daher zur Entschlüsselung diese Anfangskonstellation oder Initialisierung bekannt sein. Daher wird diese Initialisierung, die also der Schlüssel ist, dem Nutzer mitübertragen werden.

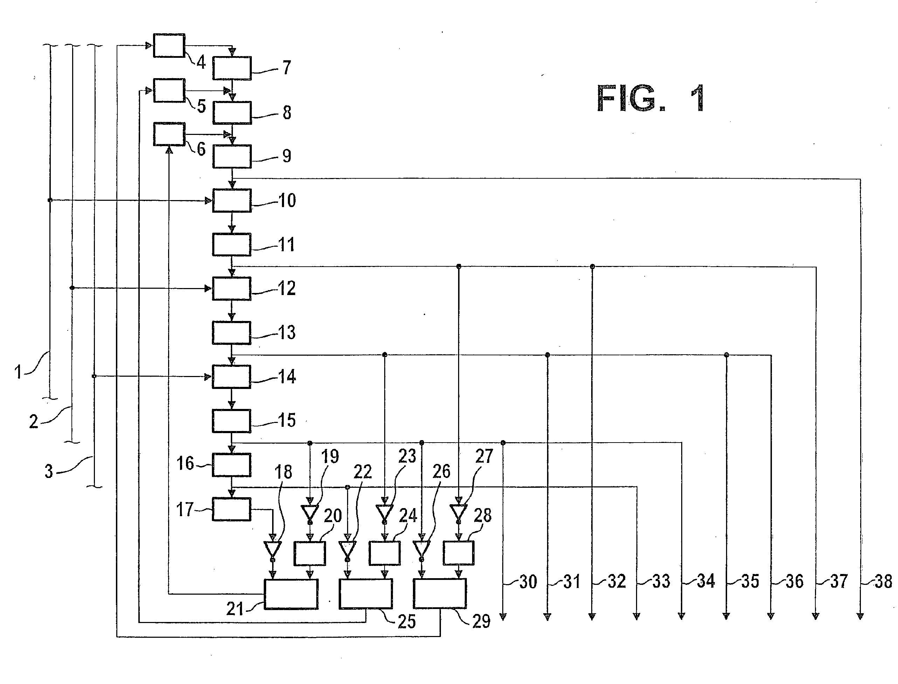

Die Initialisierungsworte werden an den Eingang eines Pseudozufallsgenerators gegeben, womit der Pseudozufallsgenerator dann Pseudozufallsworte erzeugt. In Figur 1 ist die Parallelverarbeitung mit Q-Registern gezeigt, um parallel mehrere Pseudozufallsworte zu erzeugen. Hier werden gleichzeitig drei Zufallsworte erzeugt. Ein Register ist ein Schaltungsbaustein, der dazu benutzt wird, um ein Datum von mindestens einem Bit Größe zu speichern, wobei ein Register hier ein flüchtiger Speicher ist. Ein flüchtiger Speicher verliert nach dem Ausschalten der elektrischen Energie seinen Speicherinhalt.

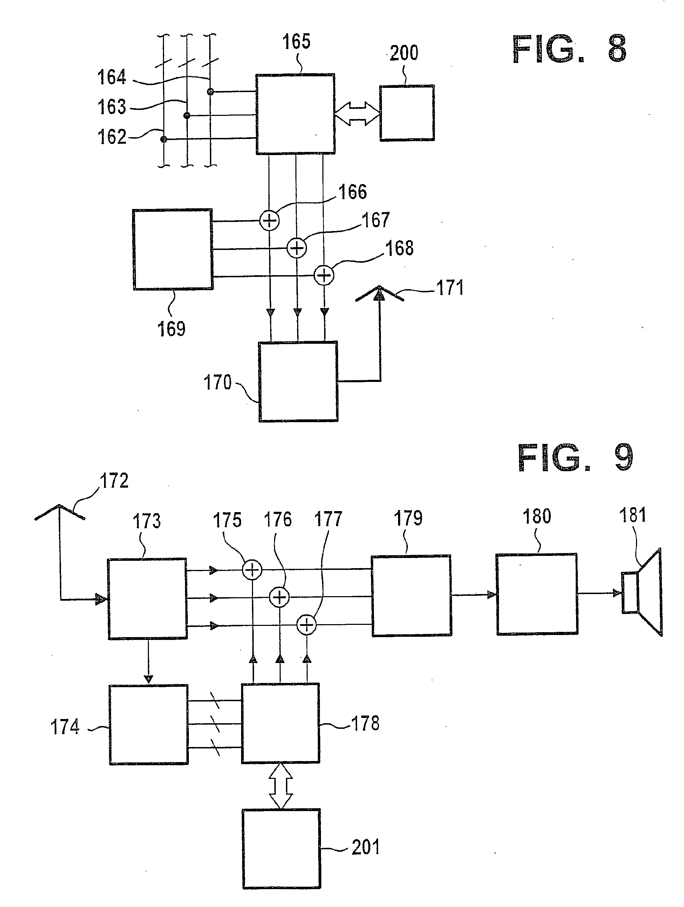

Pseudozufallsworte haben hier eine Länge von 8 Bit, also Bytelänge, und werden aus einem Initialisierungswort errechnet. Der Pseudozufallsgenerator ist mit einem Prozessor 200 (Fig. 8) verbunden, um die Arbeitsschritte des Pseudozufallsgenerators zu steuern. Dieser Prozessor kann im übrigen auch Teil des Pseudozufallsgenerators selbst sein. Die Initialisierungsworte werden mit einem Zufallsgenerator, der zum Beispiel ein Rauschgenerator ist, oder mit einem Speicher, der eine Vielzahl von Zufallszahlen abgespeichert hat, erzeugt.

In Fig. 1 ist eine Parallelverarbeitung mit Q-Registern dargestellt. Von einem Bus 1 mit acht Bit Breite geht eine angezapfte Leitung zu einer Exklusiv-Oder-Verknüpfung 10. Von einem Bus 2 geht eine angezapfte Leitung zu einer Exklusiv-Oder-Verknüpfung 12. Von einem Bus 3 geht eine angezapfte Leitung zu einer Exklusiv-Oder-Verknüpfung 14.

Die angezapften Leitungen von den Bussen 1, 2 und 3 haben jeweils vier Bit Breite. Der Bus 3 liefert das Initialisierungssignal für einen Zeitpunkt n, der Bus 2 liefert das Initialisierungssignal für einen Zeitpunkt n+1 und der Bus 1 das Initialisierungssignal für einen Zeitpunkt n+2. Die Zahl n ist hier eine ganze Zahl und bezeichnet einen Takt.

Die Exklusiv-Oder-Verknüpfung 10 verknüpft das Signal vom Bus 1 mit einem Signal von einem Register Q5 9. Nach einer einmaligen Initialisierung werden die Signale auf den Bussen 1, 2 und 3 gleich 0 gesetzt. Die Exklusiv-Oder-Verknüpfungen 10, 12 und 14 bewirken dann, daß die Registerinhalte, die mit den Initialisierungsignalen verknüpft werden auch das Ergebnis dieser Exklusiv-Oder-Verknüpfungen sind. Es ist nämlich so, daß eine Exklusiv-Oder-Verknüpfung einer Bitfolge mit einer Nullen-Bitfolge wieder die ursprüngliche Bitfolge ergibt.

Bei einer Exklusiv-Oder-Verknüpfung ist das Ergebnis für ein Bit eine Eins, wenn an den Eingängen der Exklusiv-Oder-Verknüpfung eine Eins und eine Null anliegt. Liegen hingegen zwei Nullen oder zwei Einsen vor, dann ist das Ergebnis der Exklusiv-Oder-Verknüpfung eine Null.

Das Ergebnis der Exklusiv-Oder-Verknüpfung 10 gelangt im nächsten Takt in ein Register Q4 11. Der Ausgang von Q4 11 geht einerseits zur Exklusiv-Oder-Verknüpfung 12. Und zu einem Inverter 27 und zu einem Ausgang A1 (n+2) 32 und zu einem Ausgang D2 (n+1) 37. Eine Exklusiv-Oder-Verknüpfung hat jeweils zwei Eingänge, wobei der eine Eingang hier von einem Bus kommt und der andere Eingang von einem Register. Die Ausgänge A1 (n) 32 und A2 (n+1) 37 werden mittels einer Logikschaltung, die später erläutert wird, verknüpft, um die Pseudozufallsworte zu generieren. Auf den Inverter 27 folgt ein Rotationsregister 28.

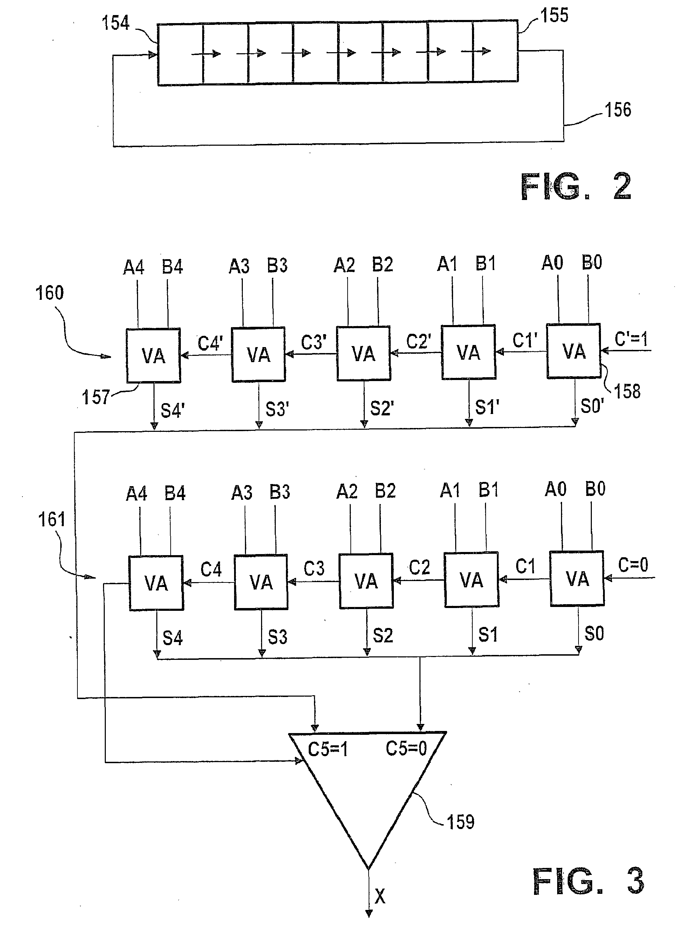

Figur 2 erläutert solch ein Rotationsregister. Das Rotationsregister besteht aus acht Zellen, wobei die niederwertigste Zelle 154 als Eingang eine Leitung 156 aufweist, die von der Zelle des Rotationsregisters kommt, die das höchstwertige Bit enthält. Dadurch wird gewährleistet, daß in einem Takt die Bits zyklisch nach rechts verschoben werden, wobei das höchstwertige Bit im folgenden Takt das niederwertigste Bit sein wird, wobei jedoch alle anderen Bits die nächst höherwertige Position einnehmen werden. Das niederwertigste Bit wird also im folgenden Takt das nächsthöhere Bit sein.

Nach dem Rotationsregister 28 wird das Signal in einen ersten Eingang einer arithmetisch-logischen Einheit 29 geführt.

Die arithmetisch-logische Einheit wird in Figur 3 näher erläutert. Die arithmetisch-logische Einheit weist zwei Volladdiererketten 160 und 161 und einen Multiplexer 159 auf, an dessen Ausgang das Ausgangssignal anliegt. In der ersten Volladdiererkette 160 verknüpft der Volladdierer 158 die beiden niederwertigsten Bits der Vier-Bit-Folge, die mittels der arithmetisch-logischen Einheit verknüpft werden soll. Zusätzlich liegt am Übertragseingang des Volladdierers 158 $C'=1$ an. Das heißt, wenn die Eingangsbits A0 und B0 jeweils eine 1 aufweisen, womit ein Übertrag von einer 1 entsteht, wird dieser Übertrag mit C' addiert, so daß eine 0 als Übertrag des Volladdierers 158 entsteht und auch das Ausgangssignal S0' eine 0 ist. Der Übertrag C1' geht zu einem Volladdierer, der die beiden nächstwertigen Bits A1 und B1 miteinander addiert. Als Ausgangssignale liegen einmal das Summensignal S1' und der Übertrag C2' vor. Der Übertrag C2' geht zu einem folgenden Volladdierer, der die nächsthöherwertigen Bits A2 und B2 addiert. Als Ausgänge diese Volladdierers liegt das Summensignal 32' und der Übertrag C3' vor. Der Übertrag C3' geht zu einem folgenden Volladdierer, der die nächsthöherwertigen Bits A3 und B3 miteinander addiert. Als Ausgangssignal dieses Volladdierers liegt das Summensignal S3' und der Übertrag C4' vor. Der Übertrag C4' geht an einen folgenden Volladdierer, der die höchstwertigen Bits A4 und B4 miteinander addiert. Das Ausganssignal S4' geht an eine Leitung, an die die Ausgangssignale S3', 32', S1' und S0' angeschlossen sind. Die Leitung, an die all diese Ausgangssignale angeschlossen sind, geht als Eingangssignal S' an den ersten Eingang des Multiplexers 159. Der Übertrag des Volladdierers 157 wird nicht verwendet.

Der rechte Volladdierer der zweiten Volladdiererkette 161 hat an seinem Übertragseingang $C=0$ anliegen, wobei dieser Volladdierer die niederwertigsten Bits A0 und B0 miteinander addiert. Das Summensignal dieses Volladdierers S0 ist an eine Leitung angeschlossen, an die auch alle anderen Summensignale dieser Volladdiererkette 161 angeschlossen sind und die an den zweiten Eingang des Multiplexers 159 S angeschlossen ist. Der Übertrag des Volladdierers C1 geht an den folgenden Volladdierer, der die nächsthöheren Bits A1 und B1 miteinander addiert.

Der Ausgang dieses Volladdierers S1 geht an die Leitung, die an den zweiten Eingang des Multiplexers 159 angeschlossen ist, während der Übertragsausgang C2 an den nächsten Volladdierer angeschlossen ist. Dieser Volladdierer addiert die nächsthöheren Bits A2 und B2, wobei der Ausgang dieses Volladdierers S2 an die Leitung angeschlossen ist, die am zweiten Eingang des Multiplexers 159 angeschlossen ist. Der Übertragsausgang C3 dieses Volladdierers geht an den folgenden Volladdierer, der die nächsthöherwertigen Bits A3 und B3 miteinander addiert.

Das Ausgangssignal S3 dieses Volladdierers ist an die Leitung angeschlossen, die an den zweiten Eingang des Multiplexers 159. Der Ausgang des Volladdierers C4 geht an den letzten Volladdierer der zweiten Volladdiererkette 161. Dieser letzte Volladdierer addiert die beiden höchstwertigen Bits A4 und B4, wobei der Summenausgang S4 an die Leitung angeschlossen ist, die zum zweiten Eingang des Multiplexers 159 führt. Der Übertragsausgang C5 dieses Volladdierers ist an den Eingang des Mulitplexers 159 angeschlossen, der entscheidet, ob der erste oder zweite Eingang des Multiplexers 159 zum Ausgang freigeschaltet wird. Ist der Übertrag $C5=1$ wird das Ausgangssignal der ersten Volladdiererkette verwendet, ist der Übertrag $C5=0$ wird das Ausgangssignal der zweiten Volladdiererkette verwendet.

Ein Byte weist verschiedene Bitpositionen auf, nämlich 8, die eine bestimmte Wertigkeit haben. Die Summe der Dezimalwerte der einzelnen Bitpositionen ergibt die Dezimalzahl, die durch das Byte als Binärzahl repräsentiert wird. Die niedrigste Wertigkeit ist das Bit $2°$. Weist dieses Bit eine Eins auf, dann ist der Dezimalwert 1; bei einer Null ist es 0. Da das höchstwertige Bit eines Bytes, also die 8. Stelle, hat die Wertigkeit $2^7$. Ist dieses Bit eine 1, dann ist der Dezimalwert 128; bei einer 0 ist es 0. Der Volladdierer ist ein Element, das für eine Bitposition zweier zu addierender Bytes oder längerer oder kürzerer Bitfolgen die Summe bildet, wobei ein Übertrag von dem nächstniederen Bit in die Summenbildung eingeht. Damit werden also 3 Bits miteinander addiert. Am Ausgang des Volladdierers liegt die Summe für die Bitposition vor, und eventuell ein Übertrag.

Das Ausgangssignal der arithmetisch-logischen Einheit 29 wird an einen gepufferten Eingang 4 eines Registers Q7 7 angeschlossen. Auch Register Q6 8 und Q5 9 haben gepufferte Eingänge 5 und 6. Mit der fallenden Flanke des Taktsignal, das hier nicht dargestellt ist, geht der Inhalt des gepufferten Eingangs 4 in das Register Q7 7, falls alle rückgekoppelten Register Q7 7, Q6 8 und Q5 9 leer sind. Sind die Register Q7 7 und Q6 8 bereits leer, wird in diesem Takt mit der steigenden Flanke des Taktsignals der Inhalt des Registers Q5 9 nach Q4 11 verschoben, so daß mit der fallenden Flanke des Taktsignals die Inhalte der gepufferten Eingänge 4-6 in die Register Q5 9, Q6 8 und Q7 7 und zwar in dieser Entsprechung geschoben werden.

Ein gepufferter Eingang ist hier ein Register, so daß ein gepufferter Eingang Daten halten kann.

Im nächsten Takt wird der Inhalt des Registers Q7 7 um eine Registerposition weiter geschoben, d.h. es wandert in das Register Q6 8. Das Register Q7 7 ist mit seinem Ausgang an das Register Q6 8 angeschlossen. An den Eingang des Registers Q6 8 ist auch der gepufferte Eingang 5 des Registers Q6 8 angeschlossen.

Mit der aufsteigenden Flanke des Taktsignals werden die Registerinhalte um eine Registerpositionen weiter geschoben. Der Ausgang des Registers Q6 8 ist an den Eingang des Registers Q5 9 angeschlossen. An den Eingang des Registers Q5 9 ist auch der gepufferte Eingang 6 des Registers Q5 9 angeschlossen. Auch hier wird mit der aufsteigenden Flanke des Taktsignals der Registerinhalt um eine Registerposition weiter geschoben. Der Ausgang des Registers Q5 9 ist an die Exklusiv-Oder-Verknüpfung 10 angeschlossen.

Durch diese Funktionsweise wird erreicht, daß die Register Q7 7, Q6 8 und Q5 9 nur durch die gepufferten Eingänge 4-6 gefüllt werden, wenn die Register leer sind, wobei die Inhalte der Eingangspuffer selbst bei jedem Takt überschrieben werden.

D.h. nach einem Takt ist der Inhalt des Registers Q5 9 in das Register Q4 11 verschoben worden, so daß im folgenden Takt der Ausgang des Registers Q4 11 exklusiv-oder-verknüpft mit dem Signal des Busses 2 wird, um dann in ein Register Q3 13 geführt zu werden.

Ein Ausgang des Registers Q3 13 führt zu der Exklusiv-Oder-Verknüpfung 14 zu einem Inverter 23, zu einem Ausgang A1 (n+1) 31, zu einem Ausgang C3 (n+2) 35 und zu einem Ausgang D2(n) 36. Auf den Inverter 23 folgt ein Rotationsregister 24, das aufbaut ist, wie es in Figur 2 beschrieben wurde. Auch das Rotationsregister 24 folgt einer arithmetisch-logischen Einheit, die in Figur 3 beschrieben wurde. Ein Ausgang der arithmetisch-logischen Einheit 25 führt an den gepufferten Eingang 5 des Registers Q6 8. Das Argument der Ausgänge zeigt an, für welchen Takt die Pseudozufallszahl mittels der Signale auf diesen Ausgängen berechnet wird.

Ein Ausgang der Exklusiv-Oder-Verknüpfung 14 führt an einen Eingang eines Registers Q2 15. Ein Ausgang des Registers Q2 15 führt einerseits zu einem Register Q1 16 und andererseits zu einem Inverter 19, auf den ein Rotationsregister 20 folgt, das mit seinem Ausgang an einen ersten Eingang einer arithmetisch-logischen Einheit 21 angeschlossen ist. Ein Ausgang der arithmetisch-logischen Einheit 21 führt zum gepufferten Eingang 6 des Registers Q 5. Ein Ausgang des Registers Q2 15 führt darüber hinaus zu einem Inverter 26, der an einen zweiten Eingang einer arithmetisch-logischen Einheit 29 führt, zu einem Ausgang A1(n) 30 und zu einem Ausgang C3 (n+1) 34.

Ein Ausgang des Registers Q1 16 führt einerseits zu einem Eingang eines Registers Q0 17 und andererseits zu einem Inverter 22, der an einen zweiten Eingang der arithmetisch-logischen Einheit 24 führt, und zu einem Ausgang C3(n) 33. Ein Ausgang des Registers Q0 17 führt an einen Inverter 18, der an den zweiten Eingang der arithmetisch-logischen Einheit 21 führt. Ein Ausgang des Registers Q5 9 führt auch zu einem Ausgang D2 (n+2) 38.

Die nachfolgende Tabelle macht den Ablauf in dieser Registerverschaltung verständlich. Die Argumente der Register bezeichnen die Taktzeit.

$$Q0\ (n+1) = Q1\ (n).$$

$$Q1\ (n+1) = Q2\ (n)$$

$$Q2\ (n+1) = Q3\ (n)\ \text{xor}\ Qi\ (n)$$

$$Q3\ (n+1) = Q4\ (n)$$

$$Q4\ (n+1) = Q5\ (n)$$

$$Q5\ (n+1\ ) = Q6\ (n)$$

$$Q6\ (n+1) = Q7\ (n)$$

Die gepufferten Bitfolgen in den gepufferten Eingängen 4, 5, 6 werden erst in die Register Q 7 7, Q 6 8 und Q 5 9 geschoben, wenn die Register Q8 7 und Q6 8 leer sind und das Register Q5 9 mit der steigenden Flanke des Taktsignals seinen Inhalt weitergibt, so daß dann mit der fallenden Flanke die Register Q7 7, Q6 8 und Q5 9 durch die Puffer wieder gefüllt werden. D.h. alle drei Takte werden die Register Q7, Q6 und Q5 mittels der Rekursion gefüllt. Qi bezeichnet hier ein Initialisierungswort.

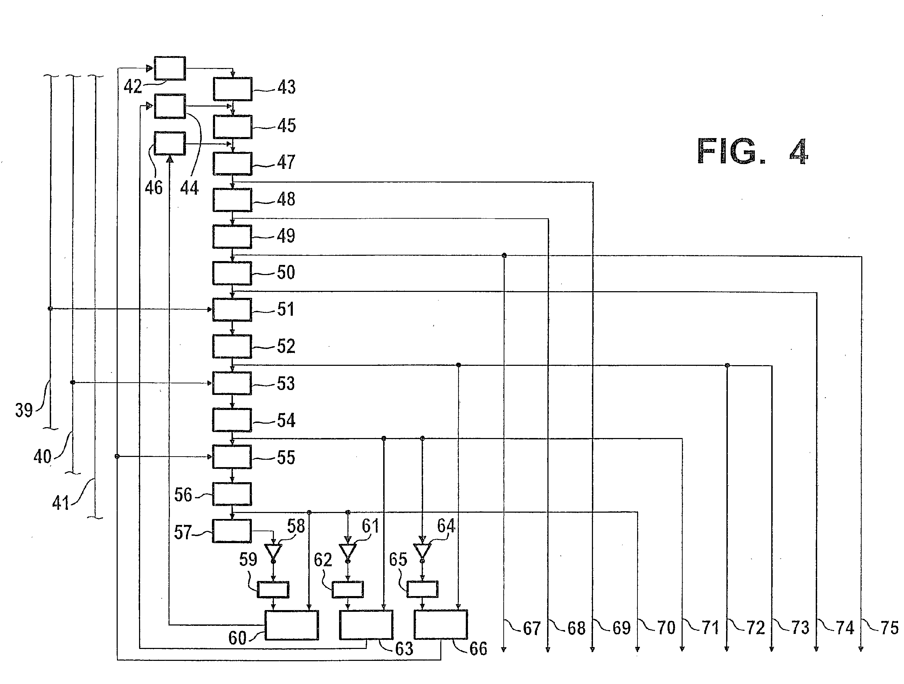

In Figur 4 ist die Parallelverarbeitung mit R-Registern gezeigt, wobei hier im Unterschied zu den Q-Registern zwei Register mehr vorliegen und damit auch eine um zwei erhöhte Anzahl an Ausgängen vorliegt. Im übrigen ist die Funktionsweise der Parallelverarbeitung mit den Q-Registern gleich.

Die Initialisierungsbitfolgen werden von Bussen 39, 40 und 41 an Exlusiv-Oder-Verknüpfungen 51, 53 und 55 übertragen. Der Bus 39 ist an einen ersten Eingang der Exklusiv-oder-Verknüpfung 51 angeschlossen, der Bus 40 ist an einen ersten Eingang der Exklusiv-Oder-Verknüpfung 53 und der Bus 41 an einen ersten Eingang der Exklusiv-Oder-Verknüpfung 55 angeschlossen.

Ein zweiter Eingang der Exklusiv-Oder-Verknüpfung 51 ist mit einem Ausgang eines Registers R4 50 verbunden. Ein Ausgang des Registers R4 50 führt auch zu einem Ausgang D3 (n+1) 74. Ein Ausgang der Exklusiv-Oder-Verknüpfung 51 führt an einen Eingang eines Registers R3 52. Ein Ausgang des Registers R3 52 führt einerseits zu einem zweiten Eingang der Exklusiv-Oder-Verknüpfung 53 und andererseits zu einem ersten Eingang der arithmetisch-logischen Einheit 66 und einem Ausgang B1 (n+2) 72 und einem Ausgang D3(n) 73. Ein Ausgang der Exklusiv-Oder-Verknüpfung 53 führt zu einem Register R2 54. Ein Ausgang des Registers R2 54 führt einerseits zu einem zweiten Eingang der Exklusiv-Oder-Verknüpfung 55 und zu einem ersten Eingang einer arithmetisch-logischen Einheit 63 und zu einem Inverter 64 und zu einem Ausgang B1 (n+1) 71. Auf den Inverter 64 folgt ein Rotationsregister 65. Ein Ausgang des Rotationsregisters 65 führt an den zweiten Eingang der arithmetisch-logischen Einheit 66. Ein Ausgang der arithmetisch-logischen Einheit 66 führt zu einem gepufferten Eingang 42 des Registers R9 43, wobei ein Ausgang des gepufferten Eingangs 42 zu dem Register R9 43 selbst führt.

Ein Ausgang der Exklusiv-Oder-Verknüpfung 55 führt zu einem Register R1 56. Ein Ausgang des Registers R1 56 führt einerseits zu einem Register R0 57 und andererseits zu einem ersten Eingang einer arithmetisch-logischen Einheit 60, zu einem Inverter 61 und zu einem Ausgang B1(n) 71. Auf den Inverter 61 folgt ein Rotationsregister 62. Ein Ausgang des Rotationsregisters 62 führt an einen zweiten Eingang der arithmetisch-logischen Einheit 63. Ein Ausgang arithmetisch-logischen Einheit 63 führt an einen gepufferten Eingang 44. Der Eingangspuffer 44 ist mit einem Eingang eines Registers R8 45 verbunden. Darüber hinaus ist ein Ausgang des Registers R9 43 an den Eingang des Registers R8 45 angeschlossen. Ein Ausgang des Registers R0 57 führt zu einem Inverter 58, auf den ein Rotationsregisters 59 folgt.

Ein Ausgang des Rotationsregisters 59 ist mit einem zweiten Eingang der arithmetisch-logischen Einheit 60 verbunden, deren Ausgang zu einem gepufferten Eingang 46 führt. Ein Ausgang des Eingangspuffers 46 führt zu einem Eingang eines Registers R7 47, wobei auch der Ausgang des Registers R8 45 zu dem Eingang des Registers R7 47 führt. Ein Ausgang des Registers R7 47 führt einerseits zu einem Register R6 48 und andererseits zu einem Ausgang A2 (n+2) 69.

Ein Ausgang des Registers R6 48 führt einerseits zu einem Eingang des Registers R5 49 und andererseits zu einem Ausgang A2 (n+1) 68. Ein Ausgang des Registers R5 49 führt einerseits zu einem Eingang des Registers R4 50 und andererseits zu einem Ausgang A2(n) 67 und zu einem Ausgang D3(n+2) 75. Ein Ausgang des Registers R4 50 führt einerseits zu einem zweiten Eingang der Exklusiv-Oder-Verknüpfung 51 und zu einem Ausgang D3 (n+1) 74.

Auch hier sind die arithmetisch-logischen Einheiten so aufgebaut, wie in Figur 3 beschrieben, und auch die Rotationsregister führen eine Rotation im Uhrzeigersinn durch.

Die Zuordnung der Registerinhalte erläutert die folgende Tabelle:

$$R0 (n+1) = R1 (n)$$

$$R1 (n+1) = R2 (n) \text{ xor } R1 (n)$$

$$R2 (n+1) = R3 (n)$$

$$R3 (n+1) = R4 (n)$$

$$R4 (n+1) = R5 (n)$$

$$R5 (n+1) = R6 (n)$$

$$R6 (n+1) = R7 (n)$$

$$R7 (n+1) = R8(n)$$

$$R8 (n+1) = R9(n)$$

Auch hier werden die Register R9 43, R8 45 und R7 47 erst dann mittel Rekursion wieder gefüllt, wenn diese Register leer sind. Dies geschieht, wie oben beschrieben, wenn das Register R7 47 bei der steigenden Flanke des Taktsignals geleert wird, wobei die Register R8 45 und R7 47 bereits leer sind.

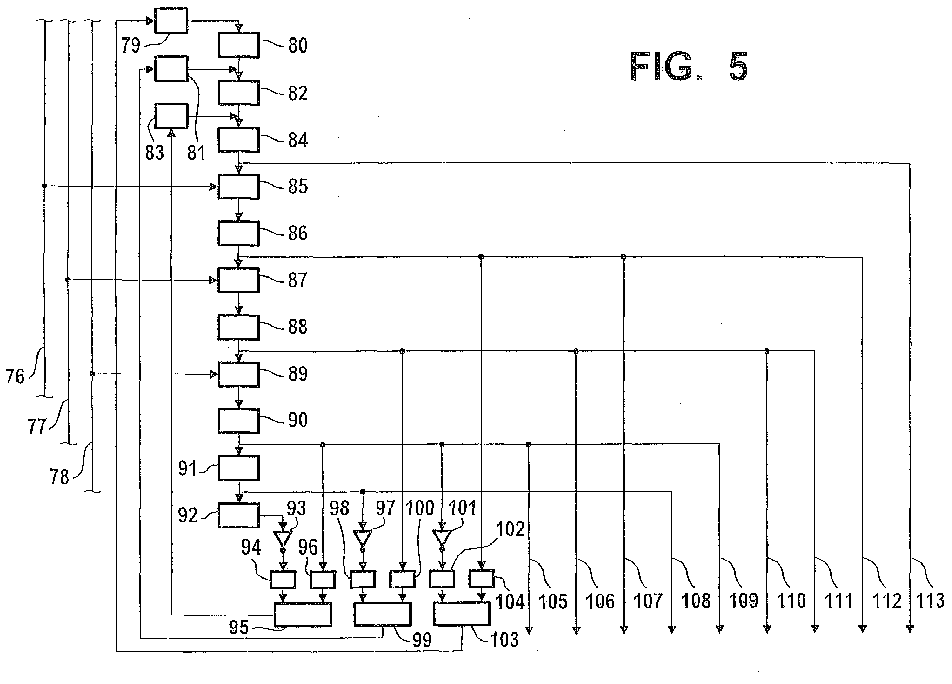

In Figur 5 wird die Parallelverarbeitung mit S-Registern dargestellt. Die Funktionsweise ist die für die Q-Register beschriebenen ähnlich, wobei hier die Rotationsregister eine Linksverschiebung der Bitfolgen bewirken.

Mit Exklusiv-Oder-Verknüpfungen 85, 87 und 89 sind Busse 76, 77 und 78 verschoben, wobei die Busse Initialisierungsbitfolgen enthalten. Von dem Bus 76 geht eine angezapfte Leitung zu einem ersten Eingang der Exklusiv-Oder-Verknüpfung 85. Von dem Bus 77 geht eine angezapfte Leitung zu einem ersten Eingang der Exklusiv-Oder-Verknüpfung 87. Von dem Bus 78 geht eine angezapfte Leitung zu der Exklusiv-Oder-Verknüpfung 89.

Ein zweiter Eingang der Exklusiv-Oder-Verknüpfung 85 ist mit einem Ausgang eines Registers S5 84 verknüpft. Ein Ausgang des Registers S5 84 führt auch zu einem Ausgang C1 (n+2) 113. Ein Ausgang des Exklusiv-Oder-Verknüpfung 85 führt zu einem Register S4 86. Ein Ausgang des Registers S4 86 ist einerseits an einem zweiten Eigang der Exklusiv-Oder-Verknüpfung 87 angeschlossen und andererseits an ein Rotationsregister 104, an einen Ausgang A3 (n+2) 107 und einen Ausgang C1(n+1) 112. Das Rotationsregister 104 ist an einem ersten Eingang einer arithmetisch-logischen Einheit 103 angeschlossen. Der Ausgang der arithmetisch-logischen Einheit 103 führt zu einem gepufferten Eingang 79. Ein Ausgang des gepufferten Eingangs 79 ist an ein Register S7 80 angeschlossen. Ein Ausgang der Exklusiv-Oder-Verknüpfung 87 führt zu einem Register S3 88, wobei ein Ausgang des Registers S3 88 an einen zweiten Eingang der Exklusiv-Oder-Verknüpfung 89 und an einen Rotationsregister 100, an einen Ausgang A3 (n+1) 106, einen Ausgang B2 (n+1) 110 und einen Ausgang C1(n) 111 führt. Der Ausgang des Rotationsregisters 100 führt zu einem ersten Eingang einer arithmetisch-logischen Einheit 99. Der Ausgang der arithmetisch-logischen Einheit 99 führt zu einem Eingang eines gepufferten Eingangs 81, dessen Ausgang mit dem Eingang eines Registers S6 82 verbunden ist. Das Register S6 82 ist über seinen Eingang auch mit einem Ausgang des Registers S7 80 verbunden.

Der Ausgang der Exklusiv-Oder-Verknüpfung 89 ist mit dem Eingang eines Registers S2 90 verbunden. Ein Ausgang des Registers S2 90 ist einerseits mit dem Eingang eines Registers S1 91, mit einem Eingang eines Rotationsregisters 96, mit einem Inverter 101, mit einem Ausgang A3(n) 105 und mit einem Ausgang B2 (n+1) 109 verknüpft. Ein Ausgang des Rotationsregisters 96 ist mit einem ersten Eingang einer arithmetisch-logischen Einheit 95 verknüpft. Ein Ausgang der arithmetisch-logischen Einheit 95 führt zu einem Eingangspuffer 83, das mit einem Ausgang mit dem Eingang des Registers S5 84 verbunden ist. Ein Eingang des Registers S5 84 ist auch mit dem Ausgang des Registers S6 82 verbunden.

Auf den Inverter 101 folgt ein Rotationsregister 102, dessen Ausgang mit einem zweiten Eingang der arithmetisch-logischen Einheit 103 verbunden ist.

Ein Ausgang des Registers S1 91 ist einerseits mit dem Eingang eines Registers S0 92 verbunden und andererseits mit einem Inverter 97 und einem Ausgang B2 (n) 108. Auf den Inverter 97 folgt ein Rotationsregister 98, dessen Ausgang mit einem zweiten Eingang der arithmetisch-logischen Einheit 99 verbunden ist. Ein Ausgang des Registers S0 92 ist an einen Inverter 93 angeschlossen. Auf den Inverter 93 folgt ein Rotationsregister 94, dessen Ausgang mit einem zweiten Eingang der arithmetisch-logischen Einheit 95 verbunden ist.

Die folgende Tabelle gibt die Zuordnung der einzelnen Registerinhalten wieder.

$$S0 \ (n+1) = S1 \ (n)$$

$$S1 \ (n+1) = 32 \ (n)$$

$$S2 \ (n+1) = S3 \ (n) \ xor \ Si \ (n)$$

$$S3 \ (n+1) = S4 \ (n)$$

$$S4 \ (n+1) = S5 \ (n)$$

$$S5 \ (n+1) = S6 \ (n)$$

$$S6 \ (n+1) = S7 \ (n)$$

Die Rekursion funktioniert wie oben beschrieben, wobei $Si(n)$ ein Initialisierungswort bezeichnet.

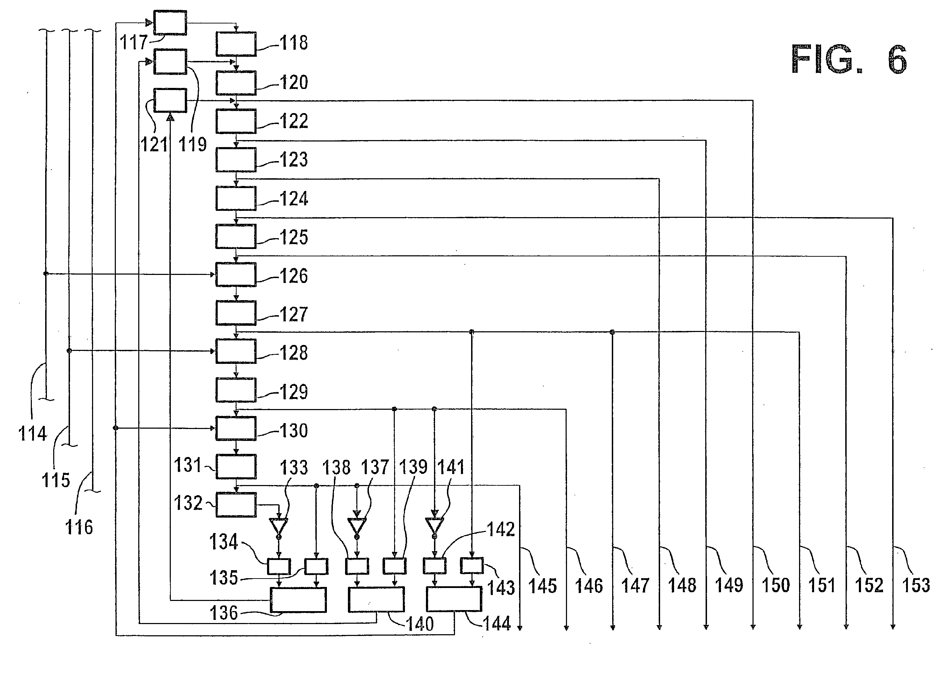

In Figur 6 ist die Parallelverarbeitung mit T-Registern dargestellt, wobei auch hier die Funktionsweise der Parallelverarbeitung mit Q-Registern entspricht, wobei hier wieder neun Register verwendet werden.

Von einem Bus 114 gelangt eine Initialisierungsbitfolge über eine angezapfte Leitung zu einem Eingang einer Exklusiv-Oder-Verknüpfung 126. Von einem Bus 115 gelangt eine Initialisierungsbitfolge über eine angezapfte Leitung zu einem Eingang einer Exklusiv-Oder-Verknüpfung 128. Von einem Bus 116 gelangt eine Initialisierungsbitfolge zu einem Eingang einer Exklusiv-Oder-Verknüpfung 130.

Über einen zweiten Eingang ist die Exklusiv-Öder-Verknüpfung 126 an den Ausgang eines Registers T4 125 angeschlossen. Der Ausgang des Registers T4 125 ist auch den Ausgang D2 (n+1) 152 angeschlossen.

Ein Ausgang der Exklusiv-Oder-Verknüpfung 126 führt zu einem Register T3 127. Ein Ausgang des Registers T3 127 führt einerseits zu einem zweiten Eingang der Exklusiv-Oder-Verknüpfung 128 und zu einem Rotationsregister 143, zu einem Ausgang B3 (n+2) 147 und einem Ausgang D1 (n) 151.

Ein Ausgang des Rotationsregisters 143 ist an einen ersten Eingang einer arithmetisch-logischen Einheit 144 angeschlossen. Ein Ausgang der arithmetisch-logischen Einheit 144 führt zu einem gepufferten Eingang 117, dessen Ausgang an ein Register T9 118 führt.

Ein Ausgang der Exklusiv-Oder-Verknüpfung 128 führt an einen Eingang eines Registers T2 129. Ein Ausgang des Registers T2 129 führt zu einem zweiten Eingang einer Exklusiv-Oder-Verknüpfung 130, zu einem Rotationsregister 139, zu einem Inverter 141 und einem Ausgang C2(n) 146.

Ein Ausgang der Exklusiv-Oder-Verknüpfung 130 führt zu einem Eingang eines Registers T1 131, dessen Ausgang zu einem Register T0 132, zu einem Rotationsregister 135, zu einem Inverter 137 und zu einem Ausgang B3(n) 145 führt. Der Ausgang des Rotationsregisters 135 führt zu einer arithmetisch-logischen Einheit 136, und zwar zu dessen ersten Eingang. Ein Ausgang der arithmetisch-logischen Einheit 136 führt zu einem gepufferten Eingang 121, dessen Ausgang zu einem Eingang eines Registers T6 122 führt. Auf den Inverter 137 folgt ein Rotationsregister 138, das an einen zweiten Eingang der arithmetisch-logischen Einheit 140 führt.

Ein Ausgang des Registers T0 132 führt zu einem Inverter 133. Auf den Inverter 133 folgt ein Rotationsregister 134, das an einen zweiten Eingang einer arithmetisch-logischen Einheit 136 führt.

Ein Ausgang des Registers T9 118 führt zu dem Register T8 120. Ein Ausgang des Registers T8 120 führt zu dem Registereingang T7 122. An einen Ausgang des Registers T8 122 führt eine Leitung zu einem Ausgang C2 (n+2) 150. Von einem Ausgang des Registers T7 122 führt eine Leitung zu einem Ausgang C2 (n+1) 149. Weiterhin ist der Ausgang des Registers T7 122 mit einem Eingang des Registers T6 123 verbunden, dessen Ausgang einerseits mit dem Register T5 124 und mit einem Ausgang C2(n) 148 verbunden ist.

In der nachfolgenden Tabelle sind die Zuordnungen der einzelnen Register für den nächsten Takt dargestellt.

$$T0\ (n+1) = T1\ (n)$$

$$T1\ (n+1) = T2\ (n)\ \text{xor}\ Ti\ (n)$$

$$T2\ (n+1) = T3\ (n)$$

$$T3\ (n+1) = T4\ (n)$$

$$T4\ (n+1) = T5\ (n)$$

$$T5\ (n+1) = T6\ (n)$$

$$T6\ (n+1) = T7\ (n)$$

$$T7\ (n+1) = T8\ (n)$$

$$T8\ (n+1) = T9(n)$$

Ti(n) bezeichnet ein Initialisierungswort.

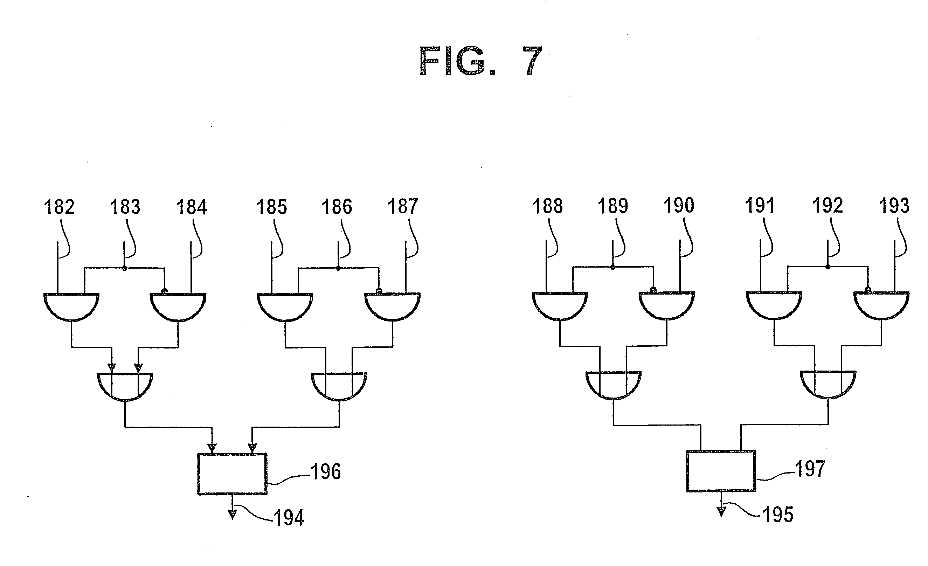

In Figur 7 ist die logische Schaltung dargestellt, die die Ausgänge der einzelnen Registerfolgen, die in den Figuren 1, 4, 5 und 6 dargestellt wurden, erläutert. Da mehrere Pseudozufallsworte, hier sind es drei, gleichzeitig generiert werden sollen, sind in diesem Fall auch drei von diesen Logikschaltungen erforderlich, um diese drei Zufallsworte gleichzeitig generieren zu können.

An Ausgängen 182 bis 193 liegen die Ausgangssignale A1 (n), A2 (n), A3 (n), B1 (n), B2 (n), B3 (n), C1 (n), C2 (n), C3 (n), D1 (n), D2 (n) und D3 (n) an. Da die eben genannten Ausgangssignale A1, A2, A3, B1, B2, B3, C1, C2, C3, D1, D2 und D3 für die Zeitpunkte n+1 und n+2 vorliegen, ist auch die hier beschriebene Logikschaltung dreimal vorhanden, um gleichzeitig drei Pseudozufallsworte zu generieren. Die Signale werden zunächst mit Und-Gattern verknüpft, wobei ein Eingang eines Und-Gatters negiert ist, und ein Signal von jeweils auf zwei Und-Gattern, wobei ein Eingang negiert ist, angelegt wird. Die Ausgangssignale der Und-Gatter werden mit Oder-Gattern verknüpft, wobei deren Ausgänge an xor-Verknüpfungen 196 und 197 gelegt werden. An den Ausgängen der xor-Verknüpfungen 194 und 195 liegen die Komponenten eines Pseudozufallswortes an.

In Figur 8 ist ein Rundfunksender dargestellt, bei dem ein Pseudozufallsgenerator 165 zur Verschlüsselung der Daten verwendet wird. Mittels der Datenbusse 162, 163 und 164 werden Initialisierungsbitfolgen an den Pseudozufallsgenerator 165 übertragen. Damit beginnt der Pseudozufallsgenerator 165 Pseudozufallsworte zu erzeugen, wobei der mit dem Pseudozufallsgenerator verbundene Prozessor 200 den Ablauf steuert.

Mit diesen Pseudozufallsworten, es werden hier gleichzeitig drei Pseudozufallsworte erzeugt, werden Daten, die von einem Kanalcodierer 169 kommen, mittels Exklusiv-Oder-Verknüpfungen 166, 167, 168 verknüpft, um diese Daten zu verschlüsseln. Die verschlüsselten Daten gelangen dann in eine Sendestufe 170 und werden mittels einer Antenne 171 versendet. Der Pseudozufallsgenerator 165 ist aufgebaut, wie in den Figuren 1, 4, 5 und 6 dargestellt. Wobei alle diese Register in dem Pseudozufallsgenerator 165 enthalten sind.

Der Kanalcodierer 169 führt mit den Daten eine Kanalcodierung durch, d.h. den Daten wird Redundanz, also zusätzliche Bits hinzugefügt, so daß eventuell auftretende Fehler bei der Übertragung im Empfänger korrigiert werden können. Dazu wird einer bestimmten Datenfolge entweder einige redundante Daten angehängt, Blockcodes genannt, oder die redundante Daten werden nach einer Vorschrift mit den ursprünglichen Daten vermischt, Faltungscodierung genannt. Die Sendestufe 170 setzt die Signal in eine Sendefrequenz um, verstärkt sie und filtert sie.

In Figur 9 ist ein Rundfunkempfänger dargestellt, der einen Pseudozufallsgenerator 178 aufweist, um verschlüsselte Daten entschlüsseln zu können.

Die Rundfunksignale werden mittels einer Antenne 172 empfangen und in einer Empfangsstufe 173 in eine niedrigere Frequenz umgesetzt, gefiltert und verstärkt. Die Empfangsstufe 173 entnimmt den empfangenen Rundfunksignalen die Initialisierungsbitfolgen und übergibt sie einer Initialisierungseinheit 174. Diese Initialisierungseinheit 174 initialisiert mit diesen Daten den Pseudozufallsgenerator 178, der damit Pseudozufallsworte generiert, und da dieselben Initialisierungsbitfolgen wie im Sender verwendet werden, produziert er dieselben Pseudozufallsworte mit denen die Daten im Sender verschlüsselt wurden. Wiederum ist ein Prozessor 201 mit dem Pseudozufallsgenerator 178 verbunden, so daß der Prozessor 201 den Ablauf bei der Generierung der Pseudozufallszahlen steuert.

Die Entschlüsselung gelingt mit einer weiteren Exklusiv-Oder-Verknüpfung der verschlüsselten Datenworte mit den gleichen Pseudozufallsworten. Dazu werden die Exklusiv-Oder-Verknüpfungen 175, 176 und 177 verwendet. Wird ein ursprüngliches Datum zweimal mit einer anderen Zahl exklusiv-oder-verknüpft, ist das Ergebnis wieder das ursprüngliche Datum. Die entschlüsselten Daten gelangen dann in einen Kanaldecodierer, der die Redundanz den Daten entnimmt und Fehler korrigiert. Dann gelangen die Daten in eine Signalverarbeitung, die die Daten für eine akustische Darstellung mittels eines Lautsprechers 181 vorbereitet.

Im übrigen kann der dargestellte Algorithmus zur Erzeugung von Pseudozufallszahlen komplett in Software realisiert werden.

**Patentansprüche**

1. Pseudozufallsgenerator zum Erzeugen von Pseudozufallsworten, wobei der Pseudozufallsgenerator mit einem Prozessor (200) verbunden ist, wobei der Prozessor (200) den Ablauf des Pseudozufallsgenerator steuert, wobei der Pseudozufallsgenerator (165, 178) Register aufweist, wobei wenigstens ein Register (7, 8, 9) rückgekoppelt ist, wobei Ausgänge von mindestens zwei Registern zu mindestens einer arithmetisch-logischen Einheit (21, 25, 29) führen, wobei Ausgänge (30 bis 38) der Register Abgriffe aufweisen, die zu Logikschaltungen führen, wobei an Ausgängen (193, 194) der Logikschaltungen die Pseudozufallsworte vorliegen, dadurch gekennzeichnet, daß ein Ausgang, der mindestens einen arithmetisch-logischen Einheit (21, 25, 29) an einen gepufferten Eingang (4 bis 6) eines Registers angeschlossen ist, daß der Prozessor (200) einen Inhalt der gepufferten Eingänge (4-6) in die Register weiterschaltet, falls die rückgekoppelten Register leer sein werden, daß Eingänge, an denen Initialisierungssignale (1 bis 3) anliegen mit einer Exklusiv-Oder-Verknüpfung (10, 12, 14) mit einem Ausgang eines Registers verknüpft sind und zu einem Eingang eines weiteren Registers führen, und daß mindestens drei Register (15 bis 17) miteinander direkt verbunden sind.

2. Pseudozufallsgenerator nach Anspruch 1, dadurch gekennzeichnet, daß an mindestens einem Eingang der mindestens eine arithmetisch-logischen Einheit mindestens eine Rotationseinheit (20, 24, 25) vorhanden ist, die die Reihenfolge der Bits des invertierenden Eingangssignals zirkular verschiebt.

3. Pseudozufallsgenerator nach Anspruch 2, dadurch gekennzeichnet, daß die arithmetisch-logischen Einheit (20, 24, 25) zwei parallele Volladdiererketten (160, 161) und einen an Ausgänge der Volladdiererketten angeschlossenen Multiplexer (159) aufweist, wobei ein Übertragseingang der ersten Volladdiererkette mit logisch 1 geschaltet ist, wobei ein Übertragseingang der zweiten Volladdiererkette mit logisch 0 geschaltet ist und ein Steuereingang des Multiplexers mit einem Übertragseingang der zweiten Volladdiererkette verbunden ist.

4. Pseudozufallsgenerator nach Anspruch 3, dadurch gekennzeichnet, daß von den Registerabgriffen (30 bis 38) vier Bitleitungen zu den Logikschaltungen führen.

5. Rundfunksender zum Senden von Rundfunksignalen, wobei die Rundfunksignale verschlüsselte Datenworte enthalten, wobei der Rundfunksender einen Kanalcodierer (169), einen Pseudozufallsgenerator (165), eine Sendestufe (170) und eine Antenne (171) aufweist, wobei die Sendestufe (170) die verschlüsselten Datenworte mittels der Antenne (171) versendet, dadurch gekennzeichnet, daß der Pseudozufallsgenerator (165) mehr als ein Pseudozufallswort in einem Operationsschritt erzeugt und daß Exklusiv-Oder-Verknüpfungen (166 bis 168) diese Pseudozufallsworte mit denen vom Kanalcodierer (169) kommenden Datenworten verknüpft, um die Datenworte zu verschlüsseln.

6. Rundfunkempfänger zum Empfang von Rundfunksignalen, wobei die Rundfunksignale verschlüsselte Datenworte enthalten, wobei der Rundfunksender eine Antenne (172), ein Empfangsteil (173), eine Initialisierungseinheit (174), einen Pseudozufallsgenerator (178) und einen Kanaldecodierer (179) aufweist, wobei der Empfangsteil (173) aus den mittels Antenne (172) empfangenen Rundfunksignalen die verschlüsselten Datenworte entnimmt, wobei der Kanaldecodierer (179) die entschlüsselten Datenworte einer Kanaldecodierung unterzieht, dadurch gekennzeichnet, daß Exklusiv-Oder-Verknüpfungen (175 bis 177) die verschlüsselten Datenworte mit mehreren Pseudozufallsworten, die der Pseudozufallsgenerator (178) gleichzeitig er-

**EP 1 130 508 A2**

zeugt, nachdem die Initialisierungseinheit (174) den Pseudzufallsgenerator (178) initialisiert hat, verknüpft, um die verschlüsselten Datenworte zu entschlüsseln.

FIG. 1

154    155

156

**FIG. 2**

A4  B4    A3  B3    A2  B2    A1  B1    A0  B0

160

157                                                                    158

VA    C4'  VA    C3'  VA    C2'  VA    C1'  VA    C'=1

S4'         S3'         S2'         S1'         S0'

A4  B4    A3  B3    A2  B2    A1  B1    A0  B0

161

VA    C4   VA    C3   VA    C2   VA    C1   VA    C=0

S4         S3         S2         S1         S0

C5=1    C5=0

159

X

**FIG. 3**

FIG. 4

EP 1 130 508 A2

13

FIG. 5

# FIG. 6

FIG. 7

193 192 191 197 195

190 189 188

187 186 185 196 194

184 183 182

16

FIG. 8

FIG. 9